# EUROPEAN PATENT APPLICATION

(11) **EP 4 589 763 A1**
(43) Date of publication of application: **23.07.2025**
(21) Application number: 24215246.0
(22) Date of filing: 25.11.2024
(51) Int. Cl.: H01M 50/595, H01M 50/55, H01M 50/178, H01M 50/105, H01M 10/04

(54) **SECONDARY BATTERY**

(30) Priority: 27.12.2023 KR 20230192791
(71) Applicant: SAMSUNG SDI CO., LTD., Yongin-si, Gyeonggi-do 17084 (KR)
(72) Inventor: BAEK, Moo Ryong, 17084 Yongin-si (KR)
(74) Representative: Marks & Clerk LLP

(57) **Abstract**

A secondary battery includes an electrode assembly, a pouch accommodating the electrode assembly, and a cover tape attached to the pouch so as to at least partially cover at least two surfaces of the pouch. The cover tape includes a fixing area attached to a first surface of the pouch, a dot area attached to a second surface of the pouch, and adhesives on the fixing area and the dot area, and the adhesives have different adhesive forces.

## Description

### BACKGROUND

### 1. Field

Aspects of embodiments of the present disclosure relate to a secondary battery.

### 2. Description of the Related Art

A secondary battery is a battery that is chargeable and dischargeable, unlike a primary battery that is not rechargeable. Low-capacity secondary batteries are used in portable small-sized electronic devices, such as smartphones, feature phones, notebook computers, digital cameras, and camcorders, and large-capacity secondary batteries are widely used as power sources for driving motors and as power storage batteries in hybrid vehicles, electric vehicles, and the like. Such a secondary battery includes an electrode assembly, which includes a positive electrode and a negative electrode, a case accommodating the electrode assembly, and an electrode terminal connected to the electrode assembly.

The information disclosed in this section is provided for enhancement of understanding of the background of the disclosure and, therefore, it may contain information that does not form the related art.

### SUMMARY

Embodiments provide a secondary battery capable of preventing or substantially preventing exposure of an adhesive of a cover tape covering an outer surface of a battery cell.

However, aspects and objects of the present disclosure are not limited to the aspects and objects as mentioned above, and other aspects and objects of the disclosure will be clearly understood by those skilled in the art from the following description.

According to one or more embodiments, a secondary battery includes an electrode assembly, a pouch accommodating the electrode assembly, and a cover tape attached to the pouch so as to at least partially cover at least two surfaces of the pouch, wherein the cover tape includes a fixing area attached to a first surface of the pouch, a dot area attached to a second surface of the pouch, and adhesives on (e.g. provided on) the fixing area and the dot area, and the adhesives have (e.g. are formed to have) different adhesive forces.

In one or more embodiments, the fixing area of the cover tape may cover (e.g. may be formed so as to cover) a side surface of the pouch, and the dot area of the cover tape may cover (e.g. may be formed so as to cover) at least a portion of an upper surface of the pouch.

In one or more embodiments, the adhesive on the dot area may have (e.g. may be formed to have) an adhesive force less than that of the adhesive on the fixing area.

In one or more embodiments, the cover tape may include a base area attached to a lower surface of the pouch and having a first adhesive force.

In one or more embodiments, the cover tape may include a first dot area extending from a side surface of the base area and having a second adhesive force, a second dot area on (e.g. formed on) an edge of a portion of the first dot area and having the first adhesive force, and a first fixing area on (e.g. formed on) an edge of the second dot area and having a third adhesive force.

In one or more embodiments, the cover tape may include a base area attached to a lower surface of the pouch and having a first adhesive force, a second fixing area extending from an opposite side surface of the base area and having a third adhesive force, and a third dot area extending along an outer side of the second fixing area and having a second adhesive force.

In one or more embodiments, the second adhesive force may be less than the first adhesive force.

In one or more embodiments, the third adhesive force may be greater than the first adhesive force.

In one or more embodiments, the first adhesive force may be 0.20 to 0.50 kgf/25 mm.

In one or more embodiments, the second adhesive force may be 0.05 to 0.25 kgf/25 mm.

In one or more embodiments, the third adhesive force may be 1.10 to 1.40 kgf/25 mm.

In one or more embodiments, the cover tape may further include a finishing area at (e.g. formed at) an end portion of the first fixing area or the third dot area and having no adhesive applied thereto.

In one or more embodiments, the finishing area may be on (e.g. formed on) an outermost edge of the first fixing area or the third dot area.

In one or more embodiments, the finishing area may have a thickness different from the thickness of a base material of the cover tape.

In one or more embodiments, the finishing area may be thicker (e.g. formed to be thicker) than the base material of the cover tape and may be in contact with an upper surface of the pouch.

At least some of the above and other features of the invention are set out in the claims.

### BRIEF DESCRIPTION OF THE DRAWINGS

The accompanying drawings, which are incorporated in this specification, illustrate some example embodiments and further illustrate technical aspects and ideas of the disclosure in conjunction with the detailed description of some embodiments that follows; however, the disclosure is not to be construed as limited to what is shown in the drawings.
FIG. 1 is an exploded perspective view of a pouch battery-type battery cell constituting a secondary battery according to an embodiment;
FIG. 2 is a perspective view of the secondary battery according to an embodiment;
FIG. 3 is an enlarged view of a region "A" in FIG. 2;
FIG. 4 is a plan view of a cover tape of the secondary battery according to an embodiment; and
FIG. 5 is a side view when viewed in a direction "B" in FIG. 2.

### DETAILED DESCRIPTION

Hereinafter, some embodiments will be described in detail with reference to the accompanying drawings. It is to be understood that the terms or words used in the specification and appended claims should not be construed as being limited to general and dictionary meanings, but should be construed based on meanings and concepts according to the technical idea of the disclosure on the basis of the principle that the inventor is permitted to define appropriate terms for the best explanation. Embodiments described in this specification and constructions shown in the drawings are provided as some example embodiments and do not necessarily represent the entirety of the technical idea of the present disclosure, and, therefore, it is to be understood that various replaceable equivalents and modifications may be possible at the time of filing the present application. As used herein, the terms "comprise" (or "include") and/or "comprising" (or "including") are intended to specify the presence of stated figures, numbers, steps, operations, members, elements, and/or groups thereof, and do not exclude the presence or addition of one or more other figures, numbers, steps, operations, members, elements, and/or groups.
Further, the use of "may" when describing embodiments may refer to "one or more embodiments."

The accompanying drawings may not be to scale, and some components may be exaggerated in dimensions in order to facilitate understanding of the disclosure. In various embodiments, the same components may be denoted by the same reference numerals.

A reference to two components being "identical" or "the same" means that they may be identical or substantially identical, or the same or substantially the same. Thus, substantially the same may include deviations that are considered low in the art, such as deviations of less than 5%. If a parameter is uniform in a given region, this may mean that the parameter is uniform from an average perspective.

Although "first," "second," and the like may be used to describe various components, the components are not limited by these terms. These terms are used to distinguish one component from another, and a first component may be referred to as a second component unless otherwise noted.

Throughout the specification, each component may be singular or plural unless otherwise indicated.

If any configuration is disposed "above" (or "below") a component or "on" (or "under") the component, this may mean not only that the configuration is disposed abutting an upper surface (or a lower surface) of the component, but that another configuration may be interposed between the component and the configuration disposed on (or under) the component.

It is also be understood that, if a component is described as being "connected," "coupled," or "linked" to another component, the components may be directly connected or linked to each other, one or more other components may be "interposed" between the components, or the components may be "connected," "coupled," or "linked" to each other via one or more other components. When one element is referred to as being electrically coupled to another element, the element may be directly coupled to the other element or indirectly coupled to the other element via one or more intervening elements.

Throughout the specification, references to "A and/or B" mean A, B, or A and B, unless otherwise indicated. The term "and/or" refers to all combinations or an arbitrary combination of a plurality of related listed items. References to "C to D" mean C or higher and D or lower, unless otherwise indicated.

Hereinafter, a secondary battery 10 according to an embodiment will be described in more detail.

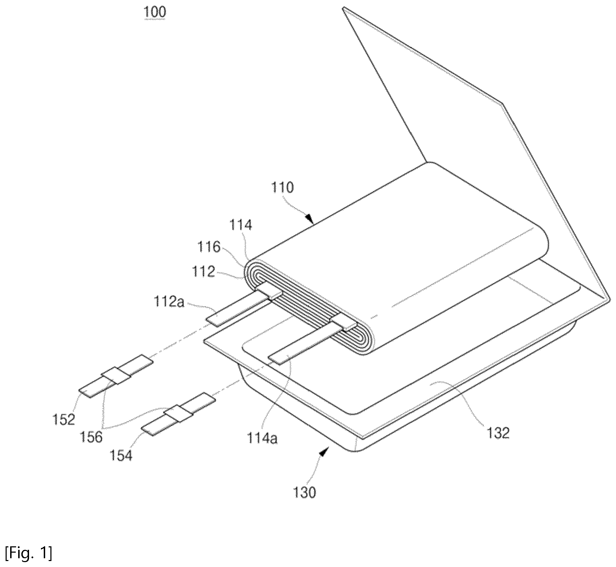

FIG. 1 is an exploded perspective view of a pouch battery-type battery cell 100 constituting a secondary battery 10 according to an embodiment.

The battery cell 100 may be configured as a pouch battery, and may include an electrode assembly 110, a first current collector, a first terminal, a second current collector, a second terminal, a case, and a cap assembly.

The battery cell 100 may include a pouch 130 accommodating the electrode assembly 110.

The electrode assembly 110 may include a negative electrode plate 112 as a first electrode plate, a positive electrode plate 114 as a second electrode plate, and a separator 116 interposed therebetween. The negative electrode plate 112 may be provided with a negative electrode tab 112a electrically connected to a negative electrode uncoated region, and the positive electrode plate 114 may be provided with a positive electrode tab 114a electrically connected to a positive electrode uncoated region. The negative electrode tab 112a and the positive electrode tab 114a may be respectively welded to a negative electrode lead 152 and a positive electrode lead 154 of an external terminal to be electrically connected to the outside. Tab films 156 for insulation from the pouch 130 may be attached to each of the negative electrode lead 152 and the positive electrode lead 154.

In a state of accommodating the electrode assembly 110, the pouch 130 may be sealed by contact between sealing portions 132 provided on edges thereof. Sealing may be accomplished with the tab films 156 disposed between the sealing portions 132. As shown in FIG. 1, the tab film 156 attached to each of the negative electrode tab 112a and the positive electrode tab 114a may be defined as a "separation-type tab film" (this sealing structure may be defined as a separation-type sealing structure).

The sealing portions 132 of the pouch 130 may be made of a thermally fusible material, and sealing may be accomplished by adhering thermally fusible layers to each other. Because a thermally fusible material generally has weak adhesion to metal, the tab film 156, which is in the form of a thin film, may be attached to the tab and may be fused to the pouch 130. However, in the separation-type sealing structure, the tab film 156 is attached and welded to each of the tabs, and then is thermally fused to the pouch 130, thus leading to deterioration in workability and productivity.

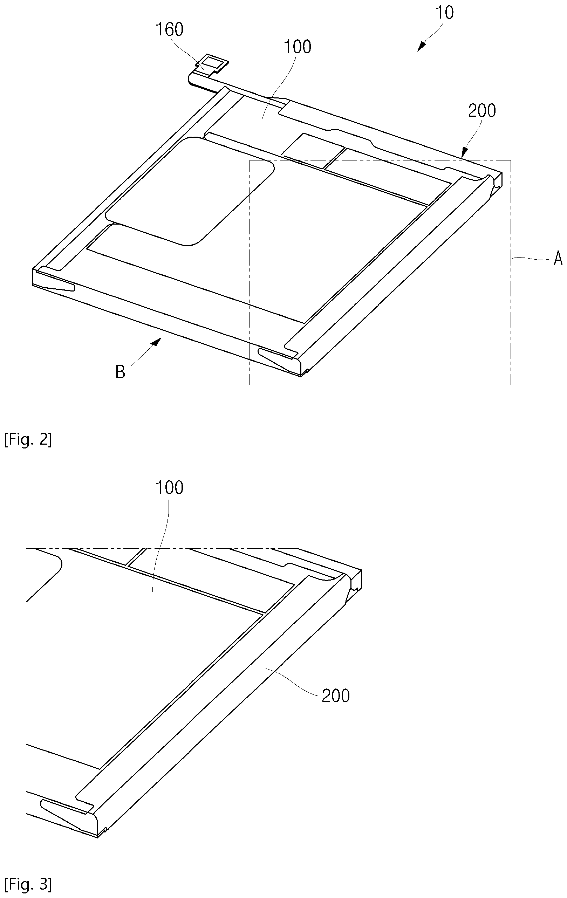

FIG. 2 is a perspective view of the secondary battery 10 according to an embodiment; and FIG. 3 is an enlarged view of a region "A" in FIG. 2.

Referring to FIGS. 2 and 3, the secondary battery 10 according to an embodiment may include the battery cell 100 and a cover tape 200 coupled to an outer surface of the battery cell 100.

The basic structure of the battery cell 100 has been described above with reference to FIG. 1. The negative electrode lead 152 and the positive electrode lead 154 of the battery cell 100 may be exposed to the outside of the sealing portions 132 of the pouch 130 and may be connected to a lead tab 160, as shown in FIG. 2. The battery cell 100 may be connected to an external device, such as a charging/discharging device via the lead tab 160.

The cover tape 200 may protect and insulate the pouch 130 of the battery cell 100. The cover tape 200 may be coupled to an outer side of the battery cell 100, e.g., an outer side of the pouch 130. The cover tape 200 may be coupled to the battery cell 100 so as to cover at least one surface of the battery cell 100.

For example, the cover tape 200 may be coupled to two side surfaces of the battery cell 100 that are adjacent to the side surface of the battery 100 on which the lead tab 160 is formed among the side surfaces of the battery cell 100. The cover tape 100 may include a wing portion formed on a side thereof to enhance adhesion to the battery cell 100.

An adhesive formed on an inner surface of the cover tape for attachment of the cover tape may have a risk of being exposed during attachment of the cover tape or use of the secondary battery. If the adhesive is exposed, the assemblability and productivity of the secondary battery may deteriorate, foreign substances may be attached thereto, or the adhesive may enter an external device and may cause defects in the external device.

The cover tape 200 used for the secondary battery 10 may solve and/or avoid the above problems by preventing (i.e. preventing or substantially preventing) exposure of an adhesive, e.g., an adhesive located on an edge thereof.

Hereinafter, the detailed configuration of the cover tape 200 used for the secondary battery 10 according to an embodiment will now be described.

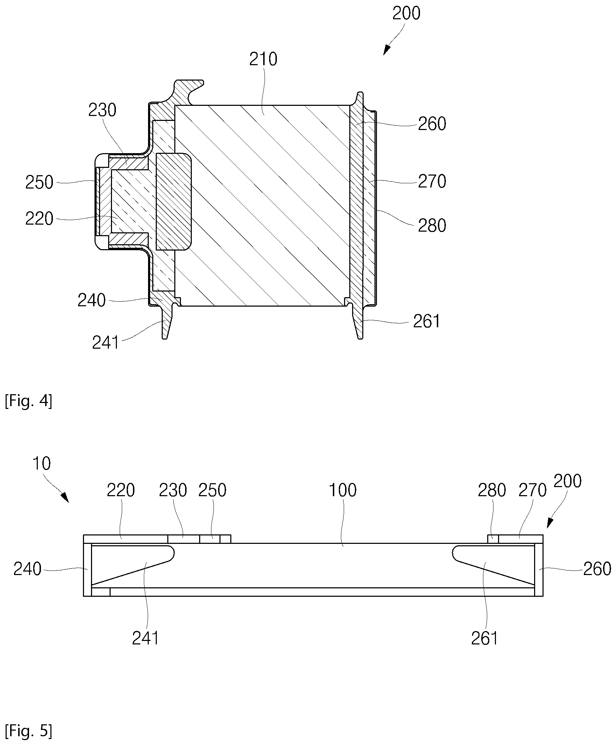

FIG. 4 is a plan view of the cover tape 200 of the secondary battery 10 according to an embodiment.

Referring to FIG. 4, the cover tape 200 may include a base area 210 as a base of the structure (e.g., the entire structure) thereof. The base area 210 may be adhered to a lower surface of the battery cell 100 with a first adhesive force.

The cover tape 200 may further include a first dot area 220, which is coupled to the base area 210 so as to be disposed on a side (a left side in FIG. 4) of the base area 210, and has a second adhesive force less than the first adhesive force, a second dot area 230, which is formed farther outward than the first dot area 220 and has the first adhesive force, and a first fixing area 240, which is formed on an edge of the second dot area 230, and has a third adhesive force greater than the first adhesive force. The cover tape 200 may further include a finishing area 250, which is formed on an edge of the first fixing area 240 and has no adhesive thereon.

The cover tape 200 may further include a second fixing area 260, which is coupled to the base area 210 so as to be disposed on an opposite side (a right side in FIG. 4) of the base area 210, and has the third adhesive force, and a third dot area 270, which is formed on an outer side of the second fixing area 260, and has the second adhesive force. The cover tape 200 may further include a finishing area 280, which is formed on an edge of the third dot area 270, and has no adhesive thereon.

The base area 210 may be attached to an entirety of a surface of the battery cell 100, e.g., a lower surface of the battery cell 100. The adhesive formed on the inner surface of the base area 210 may have the first adhesive force, and the first adhesive force may be 0.20 to 0.50 kgf/25 mm. The base area 210 may protect the entirety of the lower surface of the battery cell 100 and may keep the position of the cover tape 200 fixed.

The first dot area 220 may be coupled to the left side of the base area 210, and the adhesive formed on the inner surface of the first dot area 220 may have the second adhesive force less than the first adhesive force. During a process of manufacturing the adhesive, the dot size of the adhesive may be designed such that the adhesive force thereof corresponds to the second adhesive force less than the first adhesive force. For example, the second adhesive force may be 0.05 to 0.25 kgf/25 mm. Although the range of the second adhesive force partially overlaps the range of the first adhesive force, the second adhesive force may be less than the first adhesive force during manufacture of the cover tape 200. For example, the first dot area 220 may be attached to the battery cell 100 with an adhesive force less than the adhesive force with which the base area 210 is attached to the battery cell 100.

The second dot area 230 may be formed farther outward than the first dot area 220 and may have the first adhesive force. The second dot area 230 may be formed so as to cover a side surface of the battery cell 100 and may be bent so as to also cover a portion of an upper surface of the battery cell 100. For example, the second dot area 230 may be attached to the outer surface of the battery cell 100 with an adhesive force greater than the adhesive force with which the first dot area 220 is attached to the battery cell 100.

The first fixing area 240 may be formed on the edge of the second dot area 230 and may have the third adhesive force. For example, the third adhesive force may be 1.10 to 1.40 kgf/25 mm. Because the first fixing area 240 is attached at the outermost edge of the cover tape 200 to the battery cell 100 with the greatest adhesive force, the coupled shape and position of the cover tape 200 may be kept fixed. The first fixing area 240 may be provided at an end portion thereof with a wing portion 241. The wing portion 241 may be attached to a side surface of the battery cell 100 opposite the side surface of the battery cell 100 on which the lead tab 160 is formed.

The finishing area 250 may be formed on the edge of the first fixing area 240 and may have no adhesive thereon. Because the finishing area 250 has no adhesive thereon, even if the adhesive on the first fixing area 240 leaks therefrom due to a pressure applied thereto during an attachment process, the finishing area 250 may receive the adhesive. Therefore, the adhesive may be prevented or substantially prevented from being exposed to the outside of the cover tape 200.

The second fixing area 260 may be coupled to the right side of the base area 210, and the adhesive formed on the inner surface of the second fixing area 260 may have the third adhesive force. The second fixing area 260 may be stably attached to a right surface of the battery cell 100 using the adhesive having high adhesive force. Because the second fixing area 260 is attached to the entirety of the right surface of the battery cell 100 in the longitudinal direction of the battery cell 100, the attachment area may be large. The second fixing area 260 may be firmly attached to the battery cell 100 due to the adhesive thereof having the third adhesive force that is relatively strong. The second fixing area 260 may be provided at an end portion thereof with a wing portion 261. The wing portion 261 may be attached to a side surface of the battery cell 100 opposite the side surface of the battery cell 100 on which the lead tab 160 is formed.

The third dot area 270 may be formed on an outer side of the second fixing area, and the adhesive thereof may have the second adhesive force. During a process of manufacturing the adhesive, the dot size of the adhesive may be designed such that the adhesive force thereof corresponds to the second adhesive force less than the first adhesive force. Because the third dot area 270 is formed to be elongated along the second fixing area 260 in the longitudinal direction of the battery cell 100, even if the adhesive of the second fixing area 260 moves, the adhesive may be received within the second fixing area 260 without being exposed. Because the adhesive of the third dot area 270 has the second adhesive force less than the first adhesive force, exposure of the adhesive of the third dot area 270 to the outside during a manufacturing process may be reduced.

The finishing area 280 having no adhesive thereon may be further provided on the edge of the third dot area 270. Because the finishing area 280 has no adhesive on the inner surface of the base material of the tape, even if the adhesive having leaked from the third dot area 270 during a manufacturing process moves, the adhesive may be received within the finishing area 280. Therefore, exposure of the adhesive to the outside may be prevented or substantially prevented.

Although the finishing areas 250 and 280 have been described as being non-adhesive areas having no adhesive thereon, the finishing areas 250 and 280 may be serve as dams against the adhesive by increasing a thickness of the base material of the finishing areas 250 and 280 in one or more embodiments. In this embodiment, the finishing areas 250 and 280 may prevent or substantially prevent the adhesives of the first fixing area 240 and the third dot area 270 from leaking therefrom and thus may prevent or substantially prevent exposure of the adhesive.

Hereinafter, a configuration in which the cover tape is coupled to the battery cell in the structure of the secondary battery according to an embodiment will be described.

FIG. 5 is a side view when viewed in a direction "B" shown in FIG. 2.

The structure shown in FIG. 5 is a structure viewed in the direction "B" in a state in which the cover tape 200 is attached to the battery cell 100. As described above, the base area 210 may be attached to the entirety of the lower surface of the battery cell 100.

The first dot area 220 and the first fixing area 240 may cover a side surface (a left surface in FIG. 4) of the battery cell 100, and the first dot area 220 may further cover a portion of the upper surface of the battery cell 100. The wing portion 241 of the first fixing area 240 may be bent to be attached to the side surface (a side surface as seen in FIG. 5) of the battery cell 100 opposite the side surface of the battery cell 100 on which the lead tab is formed. The second dot area 230 may extend from the first dot area 220 to be attached to the upper surface of the battery cell 100, and the finishing area 250 provided at an end portion of the second dot area 230 may prevent or substantially prevent exposure of the adhesive.

The second fixing area 260 may cover another side surface (a right surface in FIG. 4) of the battery cell 100, and the wing portion 261 of the second fixing area 260 may be bent to be attached to the side surface (a side surface seen in FIG. 5) of the battery cell 100 opposite the side surface of the battery cell 100 on which the lead tab is formed. The third dot area 270 may further cover a portion of the upper surface of the battery cell 100. The finishing area 280 provided at an end portion of the third dot area 270 may prevent or substantially prevent exposure of the adhesive.

As described above, in the secondary battery 10 according to an embodiment, the cover tape 200 may be coupled to the lower surface, the side surfaces, and a portion of the upper surface of the battery cell 100, and the second dot area 220 and the third dot area 270 of the cover tape 200 that cover the upper surface of the battery cell may have relatively low adhesive force, thereby preventing or substantially preventing the adhesive from being exposed from the upper surface of the battery cell 100.

Because the finishing areas 250 and 280 having no adhesive applied thereto are formed at end portions of the second dot area 230 and the third dot area 270, the adhesives of the second dot area 230 and the third dot area 270 may be prevented or substantially prevented from being exposed.

In one or more embodiments, the finishing areas 250 and 280 may be manufactured in the form of a dam by increasing the thickness of the base material of the tape, thereby preventing or substantially preventing the adhesives of the second dot area 230 and the third dot area 270 from moving and thus being exposed. In this embodiment, the finishing areas 250 and 280 may be structured so as to be in direct contact with the upper surface of the battery cell 100, i.e., an upper surface of the pouch 130, thereby preventing or substantially preventing exposure of the adhesive.

As is apparent from the above description, embodiments may provide a secondary battery configured such that a cover tape is coupled to a lower surface, side surfaces, and a portion of an upper surface of a battery cell and such that a second dot area and a third dot area of the cover tape that cover the upper surface of the battery cell have relatively low adhesive force, thereby preventing or substantially preventing an adhesive from being exposed from the upper surface of the battery cell.

In some embodiments, finishing areas having no adhesive applied thereto may be formed at end portions of the second dot area and the third dot area, and therefore adhesives of the second dot area and the third dot area may be prevented or substantially prevented from being exposed.

In some embodiments, the finishing areas may be manufactured in the form of a dam by increasing the thickness of a base material of the tape, thereby preventing or substantially preventing the adhesives of the second dot area and the third dot area from moving and thus being exposed.

Embodiments are set out in the following clauses:
Clause 1. A secondary battery comprising: an electrode assembly; a pouch accommodating the electrode assembly; and a cover tape attached to the pouch so as to at least partially cover two surfaces of the pouch, wherein the cover tape comprises a fixing area attached to a first surface of the pouch, a dot area attached to a second surface of the pouch, and adhesives provided on the fixing area and the dot area, and wherein the adhesives are formed to have different adhesive forces.
Clause 2. The secondary battery of Clause 1, wherein the fixing area of the cover tape is formed so as to cover a side surface of the pouch, and wherein the dot area of the cover tape is formed so as to cover at least a portion of an upper surface of the pouch.
Clause 3. The secondary battery of Clause 2, wherein the adhesive of the dot area is formed to have lower adhesive force than the adhesive of the fixing area.
Clause 4. The secondary battery of Clause 1, wherein the cover tape comprises a base area attached to a lower surface of the pouch and having first adhesive force.
Clause 5. The secondary battery of Clause 4, wherein the cover tape comprises: a first dot area extending from one side surface of the base area and having second adhesive force; a second dot area formed on an edge of a portion of the first dot area and having the first adhesive force; and a first fixing area formed on an edge of the second dot area and having third adhesive force.
Clause 6. The secondary battery of Clause 4, wherein the cover tape further comprises: a second fixing area extending from an opposite side surface of the base area and having third adhesive force; and a third dot area extending along an outer side of the second fixing area and having second adhesive force.
Clause 7. The secondary battery of Clauses 5 or 6, wherein the second adhesive force is set to be lower than the first adhesive force.
Clause 8. The secondary battery of Clauses 5 or 6, wherein the third adhesive force is set to be higher than the first adhesive force.
Clause 9. The secondary battery of Clauses 5 or 6, wherein the first adhesive force is 0.20 to 0.50 kgf/25 mm.
Clause 10. The secondary battery of Clauses 5 or 6, wherein the second adhesive force is 0.05 to 0.25 kgf/25 mm.
Clause 11. The secondary battery of Clauses 5 or 6, wherein the third adhesive force is 1.10 to 1.40 kgf/25 mm.
Clause 12. The secondary battery of Clauses 5 or 6, wherein the cover tape further comprises a finishing area formed at an end portion of the first fixing area or the third dot area and having no adhesive applied thereto.
Clause 13. The secondary battery of Clause 12, wherein the finishing area is formed on an outermost edge of the first fixing area or the third dot area.
Clause 14. The secondary battery of Clause 12, wherein the finishing area has a thickness different from a thickness of a base material of the cover tape.
Clause 15. The secondary battery of Clause 12, wherein the finishing area is formed to be thicker than a base material of the cover tape and is in contact with an upper surface of the pouch.

However, aspects and effects of the present disclosure are not limited to those described above, and other unmentioned technical aspects and effects will be apparent to those skilled in the art from the above description of some example embodiments.

While the present disclosure has been hereinabove described in connection with a limited number of example embodiments and drawings, the disclosure is not limited thereto and it is to be understood that various changes and modifications may be made by those skilled in the art within the scope of the disclosure and the appended claims and their equivalents.

## Claims

1. A secondary battery comprising:
an electrode assembly;
a pouch accommodating the electrode assembly; and
a cover tape attached to the pouch so as to at least partially cover at least two surfaces of the pouch,
wherein the cover tape comprises a fixing area attached to a first surface of the pouch, a dot area attached to a second surface of the pouch, and adhesives on the fixing area and the dot area, and
wherein the adhesives have different adhesive forces.

2. The secondary battery as claimed in claim 1, wherein the fixing area of the cover tape covers a side surface of the pouch, and
wherein the dot area of the cover tape covers at least a portion of an upper surface of the pouch.

3. The secondary battery as claimed in claim 1 or 2, wherein the adhesive on the dot area has an adhesive force less than that of the adhesive on the fixing area.

4. The secondary battery as claimed in claim 1, 2 or 3, wherein the cover tape comprises a base area attached to a lower surface of the pouch and having a first adhesive force.

5. The secondary battery as claimed in claim 4, wherein the first adhesive force is 0.20 to 0.50 kgf/25 mm.

6. The secondary battery as claimed in claim 4 or 5, wherein:
the dot area comprises a first dot area extending from a side surface of the base area and having a second adhesive force;
the dot area comprises a second dot area on an edge of a portion of the first dot area and having the first adhesive force; and
the fixing area comprises a first fixing area on an edge of the second dot area and having a third adhesive force,
and wherein optionally:
the fixing area further comprises a second fixing area extending from an opposite side surface of the base area to the first dot area and having the third adhesive force; and
the dot area further comprises a third dot area extending along an outer side of the second fixing area and having the second adhesive force.

7. The secondary battery as claimed in claim 4 or 5, wherein:
the dot area further comprises a third dot area extending along an outer side of the second fixing area and having a second adhesive force;
the fixing area comprises a second fixing area extending from a side surface of the base area and having a third adhesive force.

8. The secondary battery as claimed in claim 6 or 7, wherein the second adhesive force is less than the first adhesive force.

9. The secondary battery as claimed in claim 6, 7 or 8, wherein the third adhesive force is greater than the first adhesive force.

10. The secondary battery as claimed in any one of claims 6 to 9, wherein the second adhesive force is 0.05 to 0.25 kgf/25 mm.

11. The secondary battery as claimed in any one of claims 6 to 10, wherein the third adhesive force is 1.10 to 1.40 kgf/25 mm.

12. The secondary battery as claimed in any one of claims 6 to 11, wherein the cover tape further comprises a finishing area at one or both of an end portion of the first fixing area and an end portion of the third dot area and having no adhesive applied thereto.

13. The secondary battery as claimed in claim 12, wherein the finishing area is on an outermost edge of one or both of the first fixing area and the third dot area.

14. The secondary battery as claimed in claim 12 or 13, wherein the finishing area has a thickness different from a thickness of a base material of the cover tape.

15. The secondary battery as claimed in claim 12 or 13, wherein the finishing area is thicker than a base material of the cover tape and is in contact with an upper surface of the pouch.
